# EUROPÄISCHE PATENTSCHRIFT

(11) **EP 3 447 332 B1**
(45) Veröffentlichungstag und Bekanntmachung des Hinweises auf die Patenterteilung: **30.09.2020**
(21) Anmeldenummer: 18189617.6
(22) Anmeldetag: 17.08.2018
(51) Int. Cl.: F16H 7/12

(54) **TREIBRIEMEN-SPANNER UND RIEMENANTRIEB DAMIT**
DRIVE BELT TENSIONER AND BELT DRIVE USING THE SAME
DISPOSITIF DE SERRAGE DE COURROIE D'ENTRAÎNEMENT ET ENTRAÎNEMENT À COURROIE CORRESPONDANT

(30) Priorität: 25.08.2017 DE 102017119552
(43) Veröffentlichungstag der Anmeldung: 27.02.2019
(73) Patentinhaber: Arntz Beteiligungs GmbH & Co. KG, 37671 Höxter (DE)
(72) Erfinder: Daemen, Mark, NL 6591 EJ Gennep (NL); Artz, Sander, NL 6591 ZD Gennep (NL); Klaffner, Andreas, 52066 Aachen (DE)
(74) Vertreter: Gramm, Lins & Partner Patent- und Rechtsanwälte PartGmbB

(56) Entgegenhaltungen:
- DE-A1- 3 104 201
- DE-A1- 3 836 933
- DE-A1-102008 046 425

## Beschreibung

Die Erfindung betrifft einen Treibriemen-Spanner gemäß dem Oberbegriff von Anspruch 1. Ein derartiger Treibriemen-Spanner ist aus der DE 38 36 933 A1 bekannt und dient dazu, einen Treibriemen eines drehenden Triebs mit einer definierten Spannkraft zu beaufschlagen. Kommt es zu Temperaturänderungen, so dehnt sich Flüssigkeit in einer Hülse aus und bewegt einen Druckkolben gegen die Kraft des ersten Satzes Tellerfedern. Dadurch wird die Spannkraft auf den Treibriemen vermindert. Bei Abkühlung des Treibriemen-Spanners zieht sich die Flüssigkeit in der Hülse zusammen und der zweiten Satz Tellerfedern zieht den Druckkolben zurück.

Aus der DE 31 04 201 A1 und der DE 10 2008 046 425 A1 sind Treibriemen-Spanner mit jeweils einem Satz Tellerfedern bekannt. Derartige Treibriemen-Spanner sind Standardbauteile und werden in einer Vielzahl unterschiedlicher Riementriebe verwendet. Es ist daher wünschenswert, Treibriemen-Spanner so auszubilden, dass er für eine möglichst große Vielzahl an Riementrieben verwendet werden kann.

Der Erfindung liegt die Aufgabe zugrunde, den Treibriemen-Spanner so auszubilden, dass er für eine möglichst große Vielzahl an Riementrieben verwendbar ist.

Die Erfindung löst das Problem durch einen Treibriemen-Spanner mit den Merkmalen von Anspruch 1.

Vorteilhaft an diesem Treibriemen-Spanner ist, dass bei einer Auslenkung sowohl in Auslenkrichtung als auch in die Gegenrichtung eine Rückstellkraft erzeugt wird. Der Treibriemen-Spanner könnte damit sowohl in solchen Riementrieben angewendet werden, in denen eine Spannkraft bei Auslenkung in Auslenkrichtung benötigt wird, als auch in solchen Riementrieben, bei denen eine Rückstellkraft bei Auslenkung in Gegenrichtung gewünscht ist. Im Vergleich zum bekannten Treibriemen-Spanner kann so die Produktvielfalt an Treibriemen-Spannern reduziert werden.

Vorteilhaft ist zudem, dass der erfindungsgemäße Treibriemen-Spanner einfach aufgebaut und damit leicht zu fertigen ist.

Vorteilhaft ist zudem, dass der Treibriemen-Spanner so gebaut werden kann, dass er verschleißarm ist.

Im erfindungsgemäßen Treibriemen-Spanner arbeiten der erste Satz an Tellerfedern und der zweite Satz an Tellerfedern antagonistisch zueinander. Da Tellerfedern gemäß einer bevorzugten Ausführungsform so ausgebildet werden können, dass sie einen ausgeprägten Hookeschen Bereich haben, der sich insbesondere über einen Auslenkwinkel von 0° bis zumindest 25° erstreckt, ergibt sich bei Auslenkung aus der Nulllage eine Rückstellkraft, die mit zunehmender Auslenkung proportional ansteigt. Eine derartige Charakteristik ist zum Spannen von Treibriemen besonders geeignet. Bei Treibriemen-Spannern, die Gummielemente verwenden, steigt die Federsteifigkeit hingegen oft mit zunehmender Auslenkung an.

Vorzugsweise besitzt der Treibriemen-Spanner eine Spannrolle, die am Spannarm befestigt ist und eingerichtet ist zum Zusammenwirken mit einem Treibriemen.

Günstig ist es, wenn der Treibriemen-Spanner ein Umsetzelement aufweist, das drehfest mit dem Spannarm verbunden ist und ein Gewinde aufweist, wobei das Gehäuse einen Vorsprung aufweist, der mit dem Gewinde in Eingriff steht und wobei der Vorsprung und das Umsetzelement ausgebildet sind zum Bewirken des Komprimierens von Tellerfedern beim Bewegen des Spannarms aus der Nullstellung heraus. Insbesondere ist das Umsetzelement ausgebildet zum Komprimieren des Satzes an Tellerfedern, wenn der Spannarm in die Auslenkung aus der Nullstellung heraus bewegt wird und zum Komprimieren des zweiten Satzes an Tellerfedern, wenn der Spannarm in die Gegenrichtung aus der Nullstellung heraus bewegt wird. In anderen Worten ist das Umsetzelement ausgebildet zum Umsetzen einer Drehbewegung in eine lineare Bewegung, wobei die Tellerfedern durch eine lineare Bewegung zusammengedrückt werden.

Günstig ist es, wenn das Gewinde eine konstante Steigung hat. Ein derartiges Gewinde ist besonders einfach zu fertigen.

Alternativ hat das Gewinde eine Steigung, die sich zumindest abschnittsweise mit einer Auslenkung des Spannarms von der Nullstellung ändert. Insbesondere ist es möglich, dass die Steigung sich mit der Auslenkung des Spannarms von der Nullstellung verringert, sodass die mit zunehmender Kompression zunehmende Federkonstante der Tellerfedern zumindest teilweise kompensiert wird.

Vorzugsweise ist die Spannrolle mittels eines Lochs in einem ersten Abstand von einer Drehachse des Spannarms am Spannarm befestigt, wobei der Spannarm ein zweites Loch zum Befestigen der Spannrolle in einem vom ersten Abstand verschiedenen, zweiten Abstand hat. Auf diese Weise existiert eine zweite Möglichkeit, die Spannkraft zu verändern, indem nämlich die Spannrolle in einem abweichenden Abstand zur Drehachse befestigt wird.

Im Folgenden wird die Erfindung anhand der beigefügten Zeichnungen näher erläutert. Dabei zeigt
- Figur 1: eine schematische Ansicht eines erfindungsgemäßen Riementriebs,
- Figur 2: einen erfindungsgemäßen Treibriemen-Spanner für einen Riementrieb gemäß Figur 1,
- Figur 3: einen Querschnitt durch den Riementrieb-Spanner gemäß Figur 2 und
- Figur 4: eine Explosionszeichnung des Treibriemen-Spanners gemäß Figur 2.

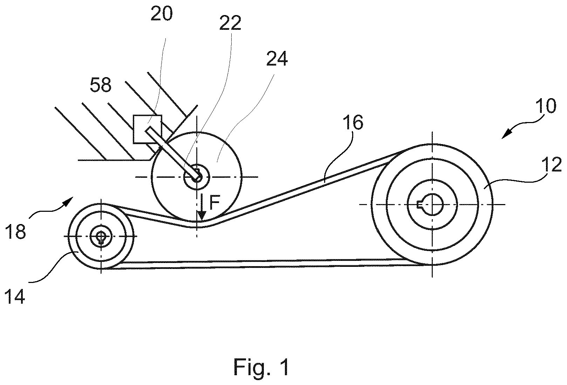

Figur 1 zeigt einen erfindungsgemäßen Riementrieb 10, der ein Antriebs-Riemenrad 12, ein Abtriebs-Riemenrad 14, einen Treibriemen 16 sowie einen Treibriemen-Spanner 18 aufweist.

Der Treibriemen-Spanner 18 besitzt ein Gehäuse 20, einen Spannarm 22 und eine Spannrolle 24, an der der Treibriemen 16 entlangläuft und von dieser gespannt wird.

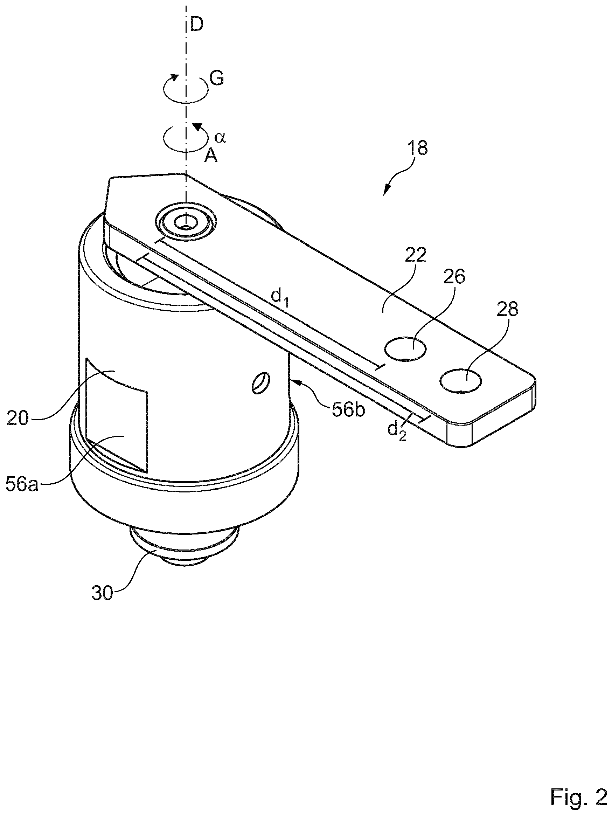

Figur 2 zeigt den Treibriemen-Spanner 18, dessen Spannarm 22, ein erstes Loch 26, an dem die Spannrolle 24 (vergleiche Figur 1) befestigt ist, sowie ein zweites Loch 28 aufweist. Der Spannarm 22 ist um eine Drehachse D um das Gehäuse 20 drehstarr. Mit einem Fuß 30 ist der Treibriemen-Spanner 18 formschlüssig befestigbar, beispielsweise festschraubbar.

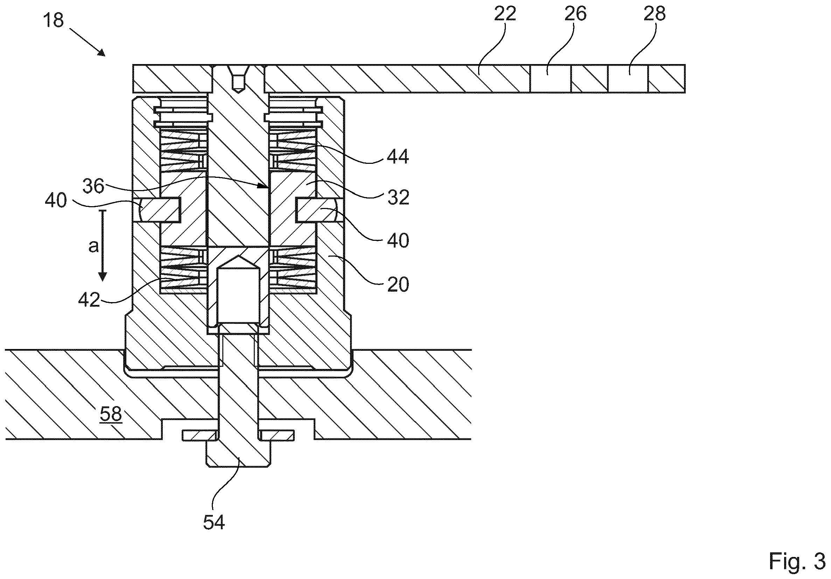

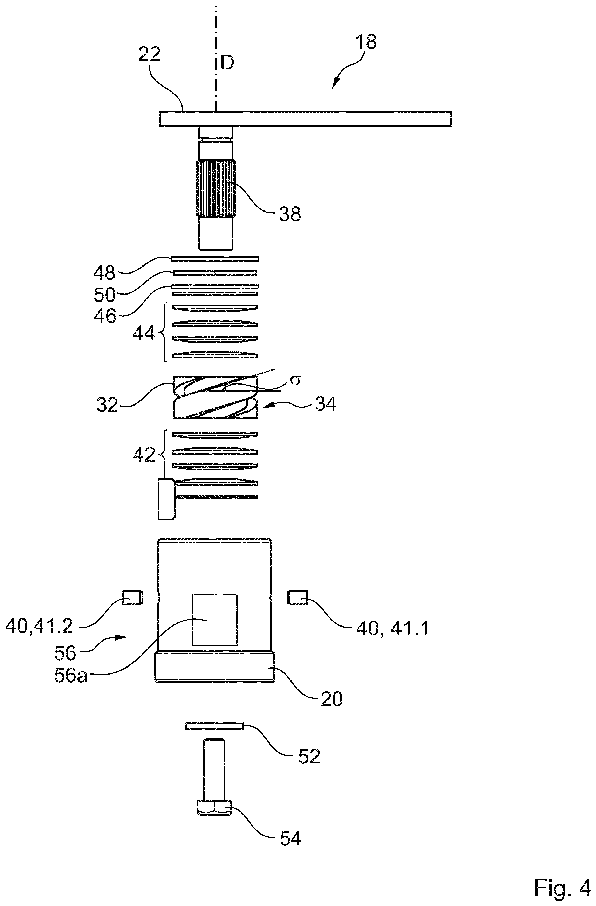

Figur 3 zeigt einen Querschnitt durch den Treibriemen-Spanner 18. Es ist zu erkennen, dass der Treibriemen-Spanner 18 ein Umsetzelement 32 besitzt, das an seiner Außenseite ein Gewinde 34 (vergleiche Figur 4) trägt. Das Umsetzelement 32 besitzt eine Innenverzahnung 36, die mit einer Außenverzahnung 38 (Figur 4) des Spannarms 22 kämmt. Dadurch sind das Umsetzelement und der Spannarm 22 drehfest miteinander verbunden.

Das Gehäuse 20 besitzt einen Vorsprung 40, der im vorliegenden Fall als Abschnitt eines Innengewindes ausgebildet ist und mit dem Gewinde 34 (siehe Figur 4) kämmt. Eine Drehung des Spannarms 22 um einen Auslenkwinkel a, der in eine Auslenkrichtung A (siehe Figur 2) positiv gezählt wird, führt dazu, dass sich das Umsetzelement 32 um einen Weg a, im vorliegenden Fall nach unten, bewegt. Der Auslenkwinkel d ist definitionsgemäß null, wenn zwischen dem Gehäuse 20 und dem Spannarm 22 kein Drehmoment wirkt.

Wird der Spannarm 22 in eine Gegenrichtung G bewegt, das heißt nur dass der Auslenkwinkel α negativ wird, so bewegt sich das Umsetzelement 32 um den Weg -a, im vorliegenden Fall also nach oben. Es sei darauf hingewiesen, dass der Auslenkwinkel stets als der Winkel gemessen wird, den der Spannarm 22 aus der Nullstellung zurückgelegt hat. Das bedeutet, dass der Auslenkwinkel α nicht modulo 360° zu bestimmen ist.

Wird der Spannarm 22 in Auslenkrichtung A bewegt, ist also der Auslenkwinkel α positiv und legt das Umsetzelement 32 den Weg a zurück, so wird ein erster Satz Tellerfedern 42 komprimiert, was zu einer Rückstellkraft führt, die auf den Spannarm 22 wirkt. Wird der Spannarm 22 hingegen in Gegenrichtung bewegt, das heißt, dass der Auslenkwinkel α negativ ist und sich damit das Umsetzelement 32 um den Weg -a bewegt, so wird ein zweiter Satz Tellerfedern 44 komprimiert.

Es sei darauf hingewiesen, dass jeder Satz an Tellerfedern auch eine einzige Tellerfeder umfassen kann. Günstig ist es jedoch, wenn der erste Satz 42 an Tellerfedern zumindest zwei, vorzugsweise drei, vier oder mehr Tellerfedern aufweist. Günstig ist es zudem, wenn auch der zweite Satz 44 an Tellerfedern zwei, drei, vier oder mehr Tellerfedern aufweist. Es ist zudem günstig, wenn beide Sätze 42, 44 die gleiche Anzahl an Tellerfedern aufweisen. Es ist aber auch möglich, dass die Anzahl der Tellerfedern im ersten Satz sich von der Anzahl der Tellerfedern im zweiten Satz unterscheidet. In diesem Fall hängt das Rückstelldrehmoment betragsmäßig nicht nur vom Betrag des Auslenkwinkels α ab, sondern auch davon, ob der Auslenkwinkel positiv oder negativ ist.

Figur 4 zeigt eine Explosionszeichnung des erfindungsgemäßen Treibriemen-Spanners 18. Es ist zu erkennen, dass der Vorsprung 40 auch durch zwei Pins 41.1, 41.2 gebildet werden kann, die beispielsweise einander gegenüberliegend am Gehäuse 20 ausgebildet sind. Es ist zu sehen, dass das Gewinde 34 einen Steigungswinkel σ hat, der im vorliegenden Fall konstant ist. Es ist aber auch möglich, dass sich der Steigungswinkel σ und damit eine Steigung S = tan σ in Abhängigkeit vom Auslenkwinkel α ändert.

Figur 4 zeigt, dass der Treibriemern-Spanner 18 zudem eine Unterlegscheibe 46, einen Rückhaltering 48, eine Halteplatte 50 und eine Dichtung 52 sowie eine Schraube 54 aufweist.

Der Spannarm 22 kann axial beweglich relativ zum Umsetzelement 32 ausgebildet sein. In anderen Worten ist es möglich, dass die Nullstellung des Spannarms 22 dadurch frei gewählt wird, dass der Spannarm in der gewünschten Nullstellung in axialer Richtung in das Umsetzelement 32 eingeschoben wird.

Das Gehäuse 20 besitzt eine Koppelstruktur 56 zum Koppeln mit einem nicht eingezeichneten Werkzeug. Im vorliegenden Fall ist die Koppelstruktur belegt durch eine erste Fläche 56a und eine parallel dazu verlaufende, gegenüberliegend angeordnete Fläche 56b, die so ausgebildet sind, dass sie mit einem metrischen Maulschlüssel drehfest verbunden und so betätigt werden können.

Zum Montieren des Treibriemen-Spanners an einem schematisch angezeichneten Bauteil 58, beispielsweise an einer Maschine, wird zunächst die Spannrolle 24 in Kontakt mit dem Treibriemen 16 gebracht und das Gehäuse 20 lose mit dem Bauteil 58 verbunden. Nachfolgend wird mit einem Schraubenschlüssel in die Koppelstruktur 56 eingegriffen und das Gehäuse 20 so relativ zum Spannarm 22 verdreht, dass eine vorgegebene Spannkraft F (vergleiche Figur 1) auf den Treibriemen aufgebracht wird. Die Abhängigkeit der Spannkraft F vom Auslenkwinkel α ist tabelliert. Der Datensatz, der diese Abhängigkeit korreliert, kann als Teil des Treibriemen-Spanners betrachtet werden.

Ist die korrekte Spannkraft F eingestellt, wird die Schraube 54 angezogen und so das Gehäuse 20 relativ zum Bauteil 58 fixiert.

**Bezugszeichenliste**

| | | | |
|---|---|---|---|
| 10 | Riementrieb | 50 | Halteplatte |
| 12 | Antriebs-Riemenrad | 52 | Dichtung |
| 14 | Abtriebs-Riemenrad | 54 | Schraube |
| 16 | Treibriemen | 56 | Koppelstruktur |
| 18 | Treibriemen-Spanner | 56a, b | Flächen |
| | | 58 | Bauteil |
| 20 | Gehäuse | | |
| 22 | Spannarm | α | Auslenkwinkel |
| 24 | Spannrolle | σ | Steigungswinkel |
| 26 | erstes Loch | A | Auslenkrichtung |
| 28 | zweites Loch | D | Drehachse |
| | | F | Spannkraft |
| 30 | Fuß | G | Gegenrichtung |
| 32 | Umsetzelement | S | Steigung |
| 34 | Gewinde | d | Abstand |
| 36 | Innenverzahnung | | |
| 38 | Außenverzahnung | | |
| 40 | Vorsprung | | |
| 42 | erster Satz Tellerfedern | | |
| 44 | zweiter Satz Tellerfedern | | |
| 46 | Unterlegscheibe | | |
| 48 | Rückhaltering | | |

## Patentansprüche

1. Treibriemen-Spanner (18) mit
(a) einem Gehäuse (20),
(b) einem erste Satz Tellerfedern (42),
(c) einem Spannarm (22), der mit den Tellerfedern (42) zum Komprimieren der Tellerfedern (42) beim Bewegen des Spannarms (22) relativ zum Gehäuse (20) in eine Auslenkrichtung (A) aus einer Nullstellung heraus verbunden ist, und
(d) einem zweiten Satz Tellerfedern (44),
**dadurch gekennzeichnet, dass**
(e) der Spannarm (22) mit den Tellerfedern (44) des zweiten Satzes zum Komprimieren beim Bewegen des Spannarms (22) in eine zur Auslenkrichtung (A) entgegengesetzte Gegenrichtung (G) aus der Nullstellung heraus verbunden ist.

2. Treibriemen-Spanner (18) nach Anspruch 1, **gekennzeichnet durch** eine Spannrolle (24), die am Spannarm (22) befestigt ist und eingerichtet ist zum Zusammenwirken mit einem Treibriemen (16).

3. Treibriemen-Spanner (18) nach einem der vorstehenden Ansprüche, **gekennzeichnet durch**
(a) ein Umsetzelement (32), das
- drehstarr mit dem Spannarm (22) verbunden ist und
- ein Gewinde (34) aufweist,
(b) wobei das Gehäuse (20) einen Vorsprung (40) aufweist, der mit dem Gewinde (34) in Eingriff steht, und
(c) wobei der Vorsprung (40) und das Umsetzelement (32) ausgebildet sind zum Bewirken des Komprimierens von Tellerfedern (42, 44) beim Bewegen des Spannarms (22) aus der Nullstellung heraus.

4. Treibriemen-Spanner (18) nach Anspruch 3, **dadurch gekennzeichnet, dass** das Gewinde (34) eine konstante Steigung hat.

5. Treibriemen-Spanner (18) nach Anspruch 3, **dadurch gekennzeichnet, dass** das Gewinde (34) eine Steigung (S) hat, die sich mit einer Auslenkung des Spannarms (22) von der Nullstellung ändert.

6. Treibriemen-Spanner (18) nach einem der vorstehenden Ansprüche, **dadurch gekennzeichnet, dass**
(a) die Spannrolle (24) in einem ersten Loch (26) in einem ersten Abstand (d₁) von einer Drehachse (D) des Spannarms am Spannarm (22) befestigt ist, und
(b) der Spannarm (22) ein zweites Loch (28) zum Befestigten der Spannrolle (24) in einem vom ersten Abstand (d₁) verschiedenen zweiten Abstand (d₂) hat.

7. Riementrieb (10) mit
(a) einem Antriebs-Riemenrad (12),
(b) einem Abtriebs-Riemenrad (14),
(c) einem Treibriemen (16), der das Antriebs-Riemenrad (12) und das Abtriebs-Riemenrad (14) miteinander verbindet, und
(d) einem Treibriemen-Spanner (18) nach einem der vorstehenden Ansprüche, mittels dem der Treibriemen (16) gespannt ist.

## Claims

1. A transmission belt tensioner (18) with
(a) a housing (20),
(b) a first set of disc springs (42),
(c) a tensioning arm (22) which is connected to the disc springs (42) for compressing the disc springs (42) upon a movement of the tensioning arm (22) out of a neutral position in a deflection direction (A) relative to the housing (20), and
(d) a second set of disc springs (44),
**characterised by** the fact that
(e) the tensioning arm (22) is connected to the disc springs (44) of the second set to compress them upon a movement of the tensioning arm (22) out of a neutral position in an opposite direction (G) to the deflection direction (A).

2. The transmission belt tensioner (18) according to claim 1, **characterised by** a tension pulley (24) that is attached to the tensioning arm (22) and configured to interact with a transmission belt (16).

3. The transmission belt tensioner (18) according to one of the above claims, **characterised by**
(a) a transposition element (32) that
- is rigidly connected to the tensioning arm (22) and
- comprises a thread (34),
(b) wherein the housing (20) has a projection (40) that engages with the thread (34), and
(c) wherein the projection (40) and the transposition element (32) are designed to effect the compression of disc springs (42, 44) upon a movement of the tensioning arm (22) out of the neutral position.

4. The transmission belt tensioner (18) according to claim 3, **characterised by** the fact that the thread (34) has a constant gradient.

5. The transmission belt tensioner (18) according to claim 3, **characterised by** the fact that the thread (34) has a pitch (S) that changes from the neutral position upon a deflection of the tensioning arm (22).

6. The transmission belt tensioner (18) according to one of the above claims, **characterised by** the fact that
(a) the tension pulley (24) is fixed to the tensioning arm (22) in a first hole (26) at a first distance (di) from a rotational axis (D) of the tensioning arm, and
(b) the tensioning arm (22) has a second hole (28) for fixing the tension pulley (24) at a second distance (d₂) that differs from the first distance (di).

7. A belt drive (10) with
(a) an input drive belt wheel (12),
(b) an output drive belt wheel (14),
(c) a transmission belt (16) which connects the input drive belt wheel (12) and the output drive belt wheel (14), and
(d) a transmission belt tensioner (18) according to one of the above claims, by means of which the transmission belt (16) is tensioned.

## Revendications

1. Tendeur de courroie d'entraînement (18) comportant
(a) un boîtier (20),
(b) un premier jeu de ressorts Belleville (42),
(c) un bras de serrage (22) relié aux ressorts Belleville (42) pour comprimer les ressorts Belleville (42) lorsque le bras de serrage (22) est déplacé par rapport au boîtier (20) dans une direction de déviation (A) à partir d'une position zéro, et
(d) un second jeu de ressorts Belleville (44),
**caractérisé en ce que**
(e) le bras de serrage (22) est relié aux ressorts Belleville (44) du second jeu pour la compression lorsque le bras de serrage (22) est déplacé dans une direction (G) opposée à la direction de déviation (A) à partir de la position zéro.

2. Tendeur de courroie d'entraînement (18) selon la revendication 1, **caractérisé par**
une poulie de tendeur (24) fixée au bras de serrage (22) et conçue pour coopérer avec une courroie d'entraînement (16).

3. Tendeur de courroie de transmission (18) selon l'une des revendications précédentes,
**caractérisé par**
(a) un élément de conversion (32) qui
- est relié de manière rigide en rotation au bras de serrage (22) et
- présente un pas de vis (34),
(b) le boîtier (20) ayant une saillie (40) qui est en engagement avec le pas de vis (34), et
(c) la saillie (40) et l'élément de conversion (32) étant réalisés pour effectuer la compression des ressorts Belleville (42, 44) lorsque le bras de serrage (22) est déplacé à partir de la position zéro.

4. Tendeur de courroie d'entraînement (18) selon la revendication 3,
**caractérisé en ce que**
le pas de vis (34) a un pas constant.

5. Tendeur de courroie d'entraînement (18) selon la revendication 3,
**caractérisé en ce que**
le pas de vis (34) présente un pas (S) qui change avec une déviation du bras de serrage (22) à partir de la position zéro.

6. Tendeur de courroie d'entraînement (18) selon l'une des revendications précédentes,
**caractérisé en ce que**
(a) la poulie de tendeur (24) est fixée au bras de serrage (22) dans un premier trou (26) à une première distance (d₁) d'un axe de rotation (D) du bras de serrage, et
(b) le bras de serrage (22) comporte un deuxième trou (28) pour fixer la poulie de tendeur (24) à une deuxième distance (d₂) différente de la première distance (d₁).

7. Entraînement à courroie (10) comportant
(a) une poulie d'entraînement menante (12),
(b) une poulie d'entraînement menée (14),
(c) une courroie d'entraînement (16) reliant ladite poulie d'entraînement menante (12) et la poulie d'entraînement menée (14), et
(d) un tendeur de courroie d'entraînement (18) selon l'une des revendications précédentes, au moyen duquel la courroie d'entraînement (16) est tendue.
